# EUROPEAN PATENT SPECIFICATION

(11) **EP 2 349 817 B1**
(45) Date of publication and mention of the grant of the patent: **05.12.2012**
(21) Application number: 09748741.7
(22) Date of filing: 23.10.2009
(51) Int. Cl.: B62D 5/12, B62D 5/30

(54) **STEERING DEVICES**
LENKVORRICHTUNGEN
DISPOSITIFS DE DIRECTION

(30) Priority: 27.10.2008 GB 0819569
(43) Date of publication of application: 03.08.2011
(73) Proprietor: AGCO GmbH, 87616 Marktoberdorf (DE)
(72) Inventor: STEUER, Michael, 87640 Biessenhofen/Altdorf (DE)
(74) Representative: Smith, Louise Marie
(86) International application number: PCT/EP2009/063967
(87) International publication number: WO 2010/049359

(56) References cited:
- EP-A- 1 911 659
- WO-A-03/053765
- DE-A1- 4 130 989
- DE-U1- 20 301 778
- FR-A- 2 657 835
- US-A- 4 060 221

## Description

This invention relates to steering devices and in particular to hydraulic steering devices for use in steering systems for utility vehicles such as agricultural tractors. The document EP 1911 659 A discloses a steering device according to the preamble of claim 1.

There is a legal requirement when such vehicles can be driven at high speed, for example speeds greater than 65kpm, for the hydraulic steering system to have at least one level of redundancy so that should the primary steering system fail there is a back-up hydraulic actuating system.

It is an object of the present invention to provide a steering device which meets the above redundancy requirements and which is also of a compact construction.

Thus in accordance with the present invention there is provided a steering device according to claim 1 including:
a first actuator comprising a first piston rod carrying a first piston moveable relative to a first cylinder to define first actuating chambers on opposite sides of the first piston, and
a second actuator co-axial with the first actuator and comprising a second piston mounted on the outer surface of the first cylinder and the moveable relative to a second outer cylinder to define second actuating chambers on opposite sides of the second piston,
the first piston rod and outer cylinder both being held against axial movement and the first cylinder being used as an axially moveable output member of the device which moves axially when the first and/or second actuating chambers are pressurised.

The first piston rod may be hollow and may include two separate chambers connected respectively to the first actuating chambers on opposite sides of the first piston, each of the first actuating chambers being pressurised via its respective rod chamber.

The present invention also provides a vehicle steering system comprising a driver operated steering device (e.g. a steering wheel) connected with first and second hydraulic steering valves each provided with pressurised fluid, and a steering device as described above in which the first steering valve is connected with the first actuating chambers and the second steering valve is connected with the second actuating chambers so that movement of the steering device in one direction pressurises one the first and/or second actuating chambers and opens up the other of the first and second actuating chambers to move the output member in a first direction, and movement of the steering device in the opposite direction pressurise the other of the first and/or second actuating chambers to move the output member in the opposite direction to the first direction.

One embodiment of the present invention will now be described, by way of example only, with reference to the accompanying drawings in which:
- Figure 1: shows diagrammatically a tractor steering system including a steering device in accordance with the present invention;
- Figure 2: shows the steering device of Figure 1 on a larger scale;
- Figure 3: shows the actuator of Figures 1 and 2 fully displaced to the left;
- Figure 4: shows the connection of the steering device with the vehicles wheels, and
- Figure 5: shows the steering device operated to turn the vehicle to the left.

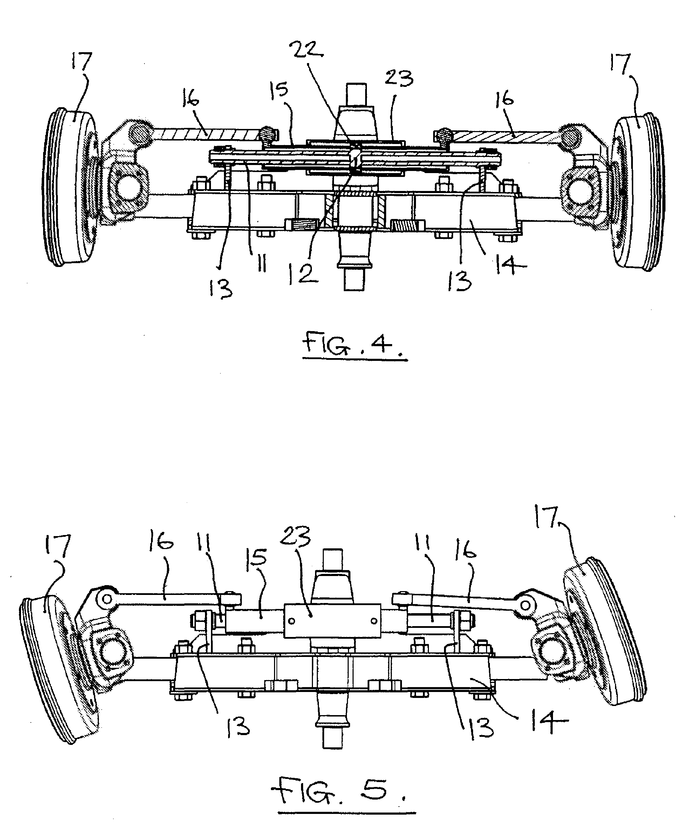

Referring to the drawings, a steering device in accordance with the present invention includes a first actuator 10 having a first piston rod 11 on which is fixed a first piston 12. Piston rod 11 is fixed by brackets 13 above the front axle 14 of the vehicle. Piston 12 slides relative to a first cylinder 15 which, as can be seen from Figures 4 and 5 as connected by tie rods 16 to the wheels 17 of the vehicle.

Piston rod 11 is hollow and provides two inlet chambers A1 and B1 which are connected with a steering valve 18 which is operated by a steering wheel 19 provided in the cab of the vehicle. Inlet chambers A1 and B1 are connected via drillings 20 with first actuating chambers A2 and B2 provided opposite sides of piston 12 within cylinder 15.

A second actuator 21 is provided co-axially around the first actuator 10 and has second piston 22 which moves with first cylinder 15 within an outer cylinder 23 which is also fixed by a bracket 24 to the front axle 14. Piston 22 divides the interior of outer cylinder 23 into second actuating chambers C and D which are connected via ports 25 with the steering valve 18.

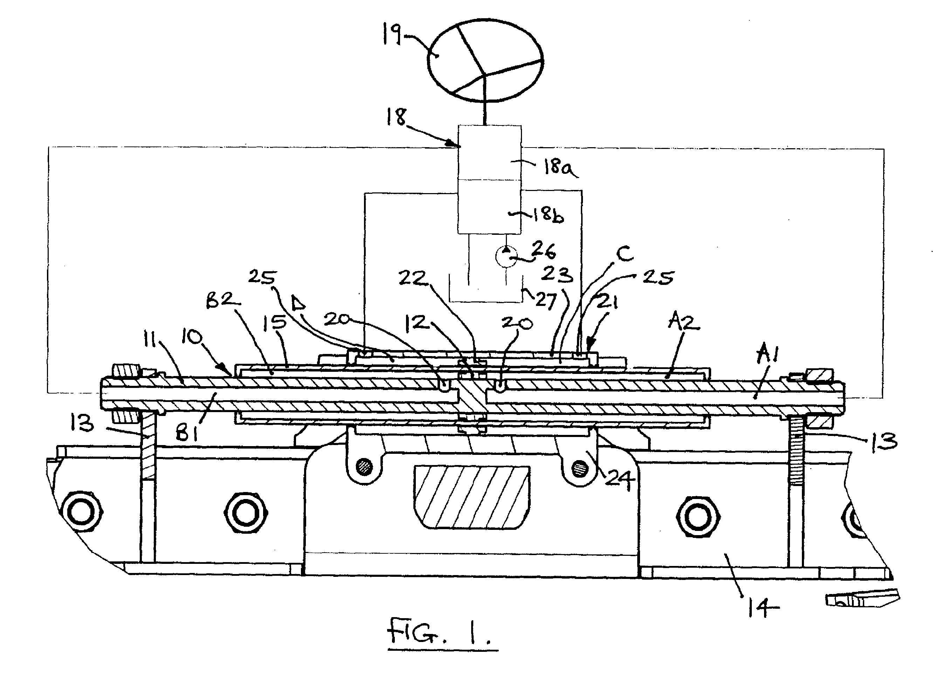

As can be seen from Figure 1, the steering valve 18 is effectively two separate valves a first steering valve 18a connected with the first actuator 10 and the second steering valve 18b connected with the second actuator 21. The valves 18a and 18b are provided in a conventional manner with pressurised steering fluid by a steering pump 26 which supplies fluid to and exhaust fluid from each actuator in conjunction with an associated sump 27.

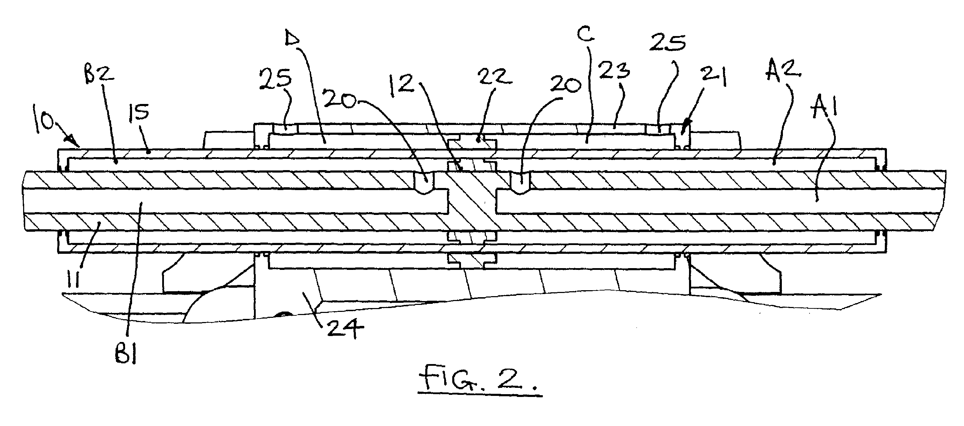

As will be appreciated, if the steering wheel 19 is turned in a first direction which causes valve 18a to provide pressurised fluid into inlet chamber A1 and first actuating chamber A2 then the first cylinder 15 will be displaced to the right, as shown in Figure 1 and 2. Similarly, the second steering valve 18b is arranged to simultaneously provide pressurised fluid to the second actuating chamber D of second actuator 21 thus again moving the piston 22 and thus the associated cylinder 15 to the right.

Similarly, if the steering wheel 19 is turned in the opposite direction to pressurise inlet chamber B1 and first actuating chamber B2 together with the second actuating chamber C then the cylinder 15 will be displaced to the left as viewed in Figures 1 and 2.

As will be appreciated, if one of the steering valves 18a and 18b fails, or the piping to the associated actuators is leaking or damaged, then the other steering valve will continue to operate thus providing redundancy in the steering operation.

The first actuator 10 can be designed as the primary steering actuator with the second actuator 21 providing the steering redundancy. In this situation the steering power of the second actuator 21 can be smaller thus making the steering device more compact and requiring the operator to apply more force to the steering wheel if the first steering actuator fails thus providing indication to the driver that the steering system requires immediate attention due to failure of the primary actuator 10, although the steering system can still be actuated in emergency situations.

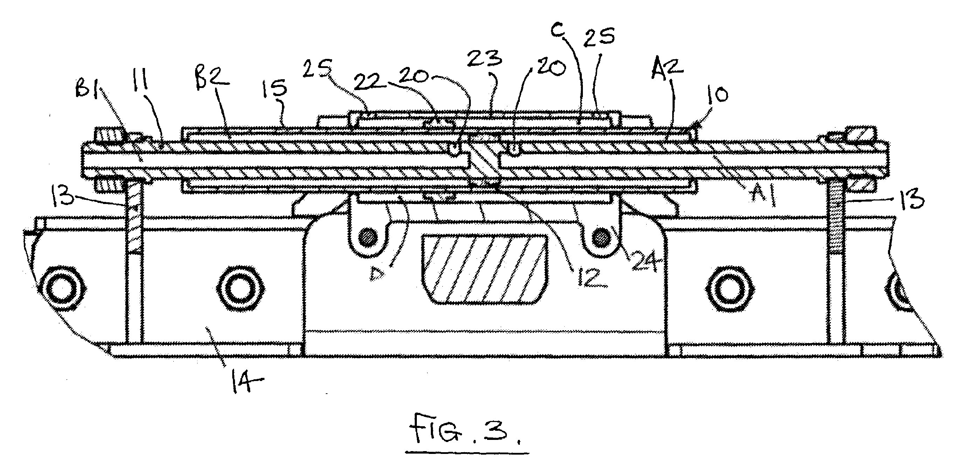

Figure 3 shows the steering actuator with the cylinder 15 displaced to its maximum left deflection position and Figure 5 shows the steering device with its cylinder 15 displaced to its maximum right position in which the steering device turns the vehicle to the left.

As will be appreciated the steering device of the present invention thus provides the necessary steering redundancy in a very efficient and compact design. The device also has good stiffness to resist the steering loads applied to the device since it is the larger cross-section tube .15, rather than the rod 11, which is connected with the steering rods 16.

## Claims

1. A steering device including:-
- a first actuator 10 comprising a first piston rod 11 carrying a first piston 12 said first piston 12 being fixed on said first piston rod 11, said first piston 12 being moveable relative to a first cylinder 15 to define first actuating chambers A2, B2 on opposite sides of the first piston 12, and
**characterized by** means of
- a second actuator 21 co-axial with the first actuator 10 and comprising a second piston 22 mounted on the outer surface of the first cylinder 15 so that the second piston 22 moves with said first cylinder is, said second piston 22 being moveable relative to a second outer cylinder 23 to define second actuating chambers C,D on opposite sides of the second piston 22,
- the first piston rod 11 and outer cylinder 23 both being held against axial movement and the first cylinder being used as an axially moveable output member of the device which moves axially when the first and/or second actuating chambers A2,B2 are pressurised.

2. A steering device according to claim 1 in which the first piston 11 rod is hollow and includes two separate chambers A1, B1 connected respectively to the first actuating chambers A2, B2 on opposite sides of the first piston 12, each of the first actuating chambers A2,B2 being pressurised via its respective rod chamber A1, B1;

3. A vehicle steering system comprising a driver operated steering device connected with first and second hydraulic steering valves (18A,18B)each provided with pressurised fluid, and a steering device according to one of the preceeding claims in which the first steering valve 18a is connected with the first actuating chambers A2,B2 and the second steering valve 18b is connected with the second actuating chambers C,D so that movement of the steering device in one direction pressurises one of the first and/or second actuating chambers and opens up the other of the first and/or second actuating chambers to move the output member 15 in a first direction, and movement of the steering device in the opposite direction pressurises the other of the first and/or second actuating chambers to move the output member in an opposite direction to the first direction.

## Patentansprüche

1. Lenkeinrichtung mit:
- einem ersten Aktuator (10) mit einer in ersten Kolbenstange (11), die von einem ersten Kolben (12) getragen ist, wobei der erste Kolben 12 an der ersten Kolbenstange (11) fixiert ist und der erste Kolben (12) zur Vorgabe von ersten Betätigungskammem (A2, B2) auf gegenüberliegenden Seiten des ersten Kolbens (12) relativ zu einem ersten Zylinder (15) bewegbar ist,
**gekennzeichnet durch**
- einen zweiten Aktuator (21), der koaxial zu dem ersten Aktuator (10) angeordnet ist und einen zweiten Kolben (22) aufweist, der an der äußeren Oberfläche des ersten Zylinders (15) montiert ist, so dass sich der zweite Kolben (22) mit dem ersten Zylinder (15) bewegt, wobei der zweite Kolben (22) zur Vorgabe zweiter Betätigungskammern (C, D) auf gegenübediegenden Seiten des zweiten Kolbens (22) relativ zu einem zweiten äußeren Zylinder (23) bewegbar ist,
- wobei die erste Kolbenstange (11) und der äußere Zylinder (23) jeweils genenüber einer axialen Bewegung gehalten sind und der erste Zylinder als ein axial bewegbares Ausgangselement der Einrichtung verwendet wird, welches sich axial bewegt, wenn mindestens eine erste und/oder zweite Betätigungskammer (A2, B2) druckbeaufschlagt ist oder sind.

2. Lenkeinrichtung nach Anspruch 1, wobei die erste Kolbenstange (11) hohl ist und separate Kammern (A1, B1) aufweist, die auf gegenüberliegenden Seiten des ersten Kolbens (12) jeweils mit den ersten Betätigungskammern (A2, B2) verbunden sind, wobei jede der ersten Betätigungskammem (A2, B2) über ihre zugeordnete Stangenkammer (A1, B1) druckeaufschlagt ist oder wird.

3. Fahrzeuglenksystem mit einer von einem Fahrer betätigten Lenkeinrichtung, die mit ersten und zweiten hydraulischen Lenkventilen (18A, 18B) verbunden ist, die jeweils mit druckeaufschlagtem Fluid ausgestattet sind, und mit einer Lenkeinrichtung nach einem der vorhergehenden Ansprüche, wobei das erste Lenkventil (18a) mit den ersten Betätigungskammern (A2, B2) verbunden ist und das zweite Lenkventil (18b) mit den zweiten Betätigungskammern (C, D) verbunden ist, so dass eine Bewegung der Lenkeinrichtung in Richtung eine der ersten und/oder zweiten Betätigungskammern druckbeaufschlagt und die andere der ersten und/oder zweiten Betätigungskammern öffnet, um das Ausgangselement (15) in eine erste Richtung zu bewegen, und wobei eine Bewegung der Lenkeinrichtung in die entgegengesetzte Richtung die andere von den und/oder zweiten Betätigungskammern druckbeaufschlagt, um das Ausgangselements in Richtung, die zu der ersten Richtung entgegengesetzt ist, zu bewegen.

## Revendications

1. Dispositif de direction comportant :
un premier actionneur (10) comprenant une première tige de piston (11) supportant un premier piston (12), ledit premier piston (12) étant fixé sur ladite première tige de piston (11), ledit premier piston (12) pouvant être déplacé par rapport à un premier cylindre (15) afin de définir des premières chambres d'activation (A2, B2) sur des côtés opposés du premier piston (12), et
**caractérisé par**
un deuxième actionneur (21) coaxial avec le premier actionneur (10) et comprenant un second piston (22) monté sur la surface externe du premier cylindre (15) de sorte que le second piston (22) se déplace avec ledit premier cylindre (15), ledit second piston (22) pouvant être déplacé par rapport à un deuxième cylindre externe (23) afin de définir des secondes chambres d'activation (C, D) sur des côtés opposés du second piston (22),
la première tige de piston (11) et le cylindre externe (23) étant tous les deux immobilisés par rapport à un mouvement axial et le premier cylindre étant utilisé en tant qu'élément de sortie pouvant se déplacer axialement du dispositif qui se déplace axialement lorsque les premières et/ou les secondes chambres d'activation (A2, B2) sont pressurisés.

2. Dispositif de direction selon la revendication 1, dans lequel la première tige de piston (11) est creuse et comporte deux chambres distinctes (A1, B1) couplées respectivement aux premières chambres d'activation (A2, B2) sur des côtés opposés du premier piston (12), chacune des premières chambres d'activation (A2, B2) étant pressurisée par l'intermédiaire de sa chambre de tige respective (A1, B1).

3. Dispositif de commande de direction de véhicule comprenant un dispositif de direction activé par conducteur couplé à des première et seconde vannes de direction hydrauliques (18A, 18B) chacune étant alimentée en fluide pressurisé, et un dispositif de direction selon l'une des revendications précédentes dans lequel la première vanne de direction (18A) est couplée aux premières chambres d'activation (A2, B2) et la seconde vanne de direction (18B) est couplée aux secondes chambres d'activation (C, D) de telle sortie qu'un mouvement du dispositif de direction dans une première direction pressurise l'une des premières et/ou secondes chambres d'activation et met à l'air l'autre des premières et/ou secondes chambres d'activation afin de déplacer l'élément de sortie (15) dans une première direction, et qu'un mouvement du dispositif de direction dans la direction opposée pressurise l'autre des premières et/ou secondes chambres d'activation afin de déplacer l'élément de sortie dans une direction opposée à la première direction.
